# EUROPEAN PATENT APPLICATION

(11) **EP 3 871 924 A1**
(43) Date of publication of application: **01.09.2021**
(21) Application number: 19877151.1
(22) Date of filing: 25.10.2019
(51) Int. Cl.: B60Q 1/00, B60Q 1/52, B60T 8/32, G01C 21/26, G08G 1/16

(54) **ROAD SURFACE DRAWING DEVICE FOR VEHICLE**

(30) Priority: 26.10.2018 JP 2018202065; 16.10.2019 JP 2019189352
(71) Applicant: KOITO MANUFACTURING CO., LTD., Minato-ku Tokyo 108-8711 (JP)
(72) Inventor: ISHIDA, Hiroyuki, Shizuoka-shi, Shizuoka 424-8764 (JP)
(74) Representative: Hoffmann Eitle
(86) International application number: PCT/JP2019/042012
(87) International publication number: WO 2020/085505

(57) **Abstract**

A road surface drawing device (3) for a vehicle is mounted on a vehicle (C), and has a road surface drawing unit (6) for drawing a road surface display with light on a road surface in a traveling direction of the vehicle on the basis of control by a control unit (5), wherein the control unit (5), on the basis of a detection of a curving form of a traveling lane of the vehicle, controls the road surface drawing unit (6) to draw a road surface display (27) in a shape following the curving form of the traveling lane (28a) on the road surface within the traveling lane (28a).

## Description

### TECHNICAL FIELD

The present invention relates to a vehicle road surface rendering device that renders, onto a road surface, a display for warning a collision with an on-road obstacle.

### BACKGROUND ART

Patent Literature 1 discloses a vehicle road surface rendering device that calculates a braking distance according to a vehicle speed and renders a road surface display extending from a vehicle to a stoppable position ahead of the vehicle by the braking distance onto a road surface of a traveling lane ahead of the vehicle, so that a driver can recognize danger of colliding with an on-road obstacle such as a preceding vehicle and a pedestrian that is present near the stoppable position.

Patent Literature 1: JP 2015-164828 A

### SUMMARY OF INVENTION

The vehicle road surface rendering device disclosed in Patent Literature 1 has a problem that since the road surface rendering device renders a linear road surface display onto a road surface ahead of the vehicle, when the road surface rendering device renders a mark on a curved road, the road surface display protrudes from the traveling lane and thus a driver cannot recognize danger on the traveling lane.

In view of the above problem, the present disclosure provides a vehicle road surface rendering device that enables a driver of a vehicle traveling on a road having a variety of shapes such as a curved road to recognize danger on a traveling lane.

In order to achieve the above object, according to an aspect of the present disclosure, there is provided a vehicle road surface rendering device. The vehicle road surface rendering device is mounted on a vehicle and includes a road surface rendering unit that uses light to render a road surface display onto a road surface in a traveling direction of the vehicle under the control of a control unit. Based on a detection of a curved form of a traveling lane of the vehicle, the control unit controls the road surface rendering unit to render a road surface display having a shape in accordance with the curved form of the traveling lane onto the road surface inside the traveling lane.

According to the above configuration, the road surface display is displayed along the traveling lane having a curved form and is displayed inside the traveling lane.

In order to achieve the object, in the vehicle road surface rendering device according to another aspect, the road surface display is a collision warning display indicating a stop position of the vehicle, and the control unit calculates a braking distance based on a speed of the vehicle and a stoppable position of the vehicle based on the braking distance, and controls the road surface rendering unit to render, onto the road surface, the collision warning display that extends from a vicinity of the vehicle to the stoppable position of the vehicle in accordance with the curved form of the traveling lane.

According to the above configuration, the collision warning display is rendered inside the traveling lane and along the traveling lane having a curved form, and is rendered from a vicinity of the vehicle to the stoppable position of the vehicle on a curved road.

In order to achieve the object, in the vehicle road surface rendering device according to still another aspect, the control unit controls the road surface rendering unit to render the collision warning display onto the road surface based on a detection of an on-road obstacle on the traveling lane of the vehicle or in the vicinity of the traveling lane.

According to the above configuration, the collision warning display is rendered onto a road surface when an on-road obstacle is detected and is not rendered onto the road surface when an on-road obstacle is not detected.

In order to achieve the object, in the vehicle road surface rendering device according to still another aspect, based on the detection of the on-road obstacle, the control unit calculates a position of the on-road obstacle and controls the road surface rendering unit to render, onto the road surface, a second collision warning display extending from the vehicle to the on-road obstacle.

According to the above configuration, when the on-road obstacle in the vicinity of the vehicle is detected, the second collision warning display is rendered to extend from the vehicle to the detected on-road obstacle.

In order to achieve the object, in the vehicle road surface rendering device according to still another aspect, based on a detected change in a braking distance of the vehicle, the control unit corrects the braking distance calculated based on the speed of the vehicle and the stoppable position, and controls the road surface rendering unit to render, onto the road surface, the collision warning display extending from the vehicle to the corrected stoppable position.

According to the above configuration, based on a detected change in the stoppable position of the vehicle, a length in a lane direction of the collision warning display rendered inside the traveling lane in a manner of extending from the vehicle to the stoppable position is changed.

In order to achieve the object, in the vehicle road surface rendering device according to still another aspect, the control unit corrects the braking distance calculated based on the speed of the vehicle to be longer based on a detection result indicating that the traveling lane is wet.

According to the above configuration, a length in the lane direction of the collision warning display rendered inside the traveling lane in a manner of extending from the vehicle to the stoppable position is increased based on an increase in the braking distance due to a wet road surface caused by raining, snowing, and freezing on a road surface, and the like.

In order to achieve the object, in the vehicle road surface rendering device according to still another aspect, the control unit corrects the braking distance calculated based on the speed of the vehicle to be shorter based on a detection result indicating that the traveling lane is an uphill road, or corrects the braking distance calculated based on the speed of the vehicle to be longer based on a detection result indicating that the traveling lane is a downhill road.

According to the above configuration, when the traveling lane of the vehicle is an uphill road and the braking distance is reduced, a length in the lane direction of the collision warning display rendered inside the traveling lane in a manner of extending from the vehicle to the stoppable position is reduced to be shorter. On the other hand, when the traveling lane of the vehicle is a downhill road and the braking distance is increased, the length in the lane direction of the collision warning display is increased to be longer.

In order to achieve the object, in the vehicle road surface rendering device according to still another aspect, the control unit controls the road surface rendering unit to render the collision warning display onto the road surface based on a detection result indicating that a road is dark.

According to the above configuration, the collision warning display is rendered onto the road surface only when the road is dark, and is not rendered onto the road surface when the road is bright.

In order to achieve the object, in the vehicle road surface rendering device according to still nother aspect, the road surface rendering unit renders the collision warning display onto the road surface using laser light.

According to the above configuration, a road surface display including a collision warning is clearly rendered using laser light during daytime traveling in which surroundings of the vehicle are bright.

According to the vehicle road surface rendering device, since the road surface display is rendered on the traveling lane having a curved shape without protruding from the traveling lane, a driver can recognize danger on the traveling lane.

### BRIEF DESCRIPTION OF DRAWINGS

Fig. 1A is a block diagram showing a vehicle road surface rendering device according to an embodiment of the present disclosure.
Fig. 1B is a block diagram showing a road surface rendering system including the road surface rendering device in Fig. 1A according to a modification.
Fig. 2 is a plan view showing a vehicle equipped with the road surface rendering device.
Fig. 3 is a cross sectional view taken along a line I-I in Fig. 2 and showing a vehicle lamp including the road surface rendering device.
Fig. 4A is a cross sectional view taken along a line II-II in Fig. 3 and showing a light deflection device of a road surface rendering unit.
Fig. 4B is a cross sectional view taken along a line III-III in Fig. 4A and showing the light deflection device of the road surface rendering unit.
Fig. 5 is a view showing a state of rendering a collision warning display from a vehicle on a traveling lane of a curved road according to a first embodiment.
Fig. 6 is a view showing a state of rendering a collision warning display from a vehicle on a traveling lane of a curved road when a road surface is wet according to a second embodiment.
Fig. 7A is a view showing a road surface of an uphill road and showing a state of rendering a collision warning display from a vehicle onto the road surface of the uphill road according to a third embodiment.
Fig. 7B is a view showing a road surface having a gradient of 0 and showing a state of rendering a collision warning display from a vehicle onto the road surface of having a gradient of 0 according to the third embodiment.
Fig. 7C is a view showing a road surface of a downhill road and showing a state of rendering a collision warning display from a vehicle onto the road surface of the downhill road according to the third embodiment.

### DESCRIPTION OF EMBODIMENTS

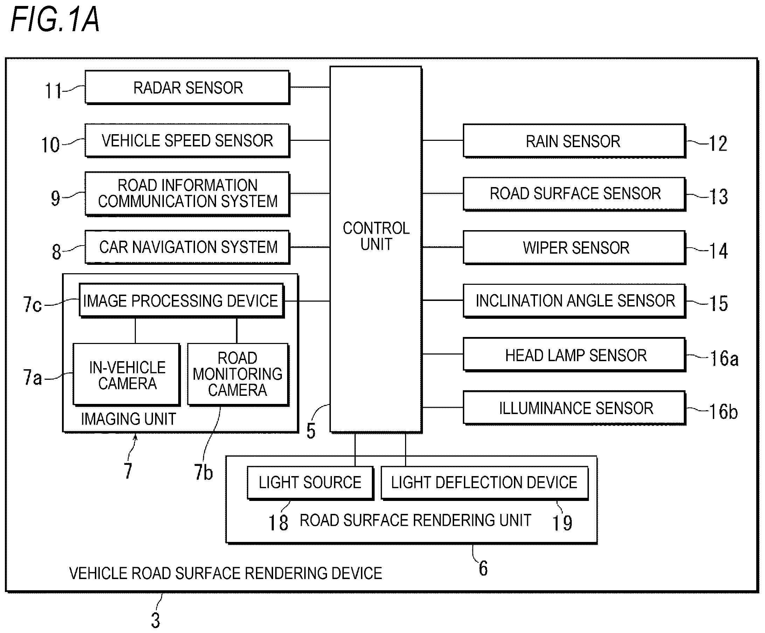

Hereinafter, preferred embodiments of the present disclosure will be described with reference to Figs. 1A to 4B. Directions shown in the drawings (upper: Up, lower: Lo, left: Le, Right: Ri, front: Fr, rear: Re) are directions viewing from a driver of a vehicle equipped with a road surface rendering device or a part of a vehicle lamp including the road surface rendering device. The directions are directions displayed for the convenience of description, and the present disclosure is not intended to be limited to the shown directions.

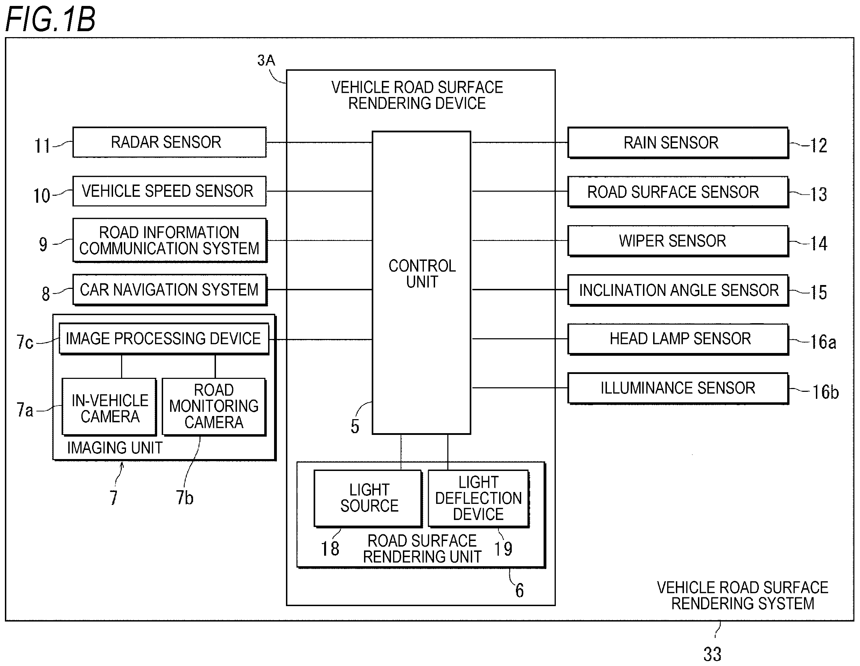

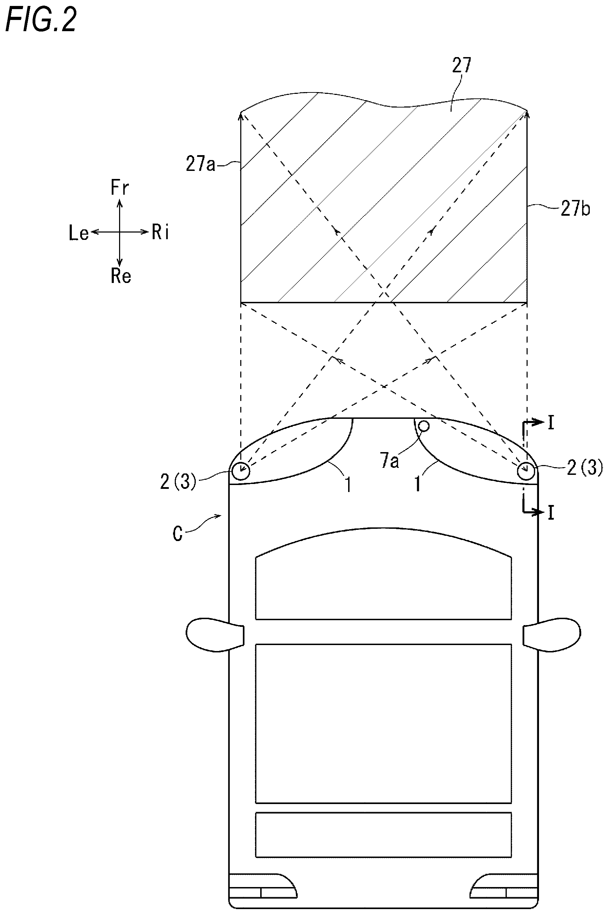

A road surface rendering lamp 2 is mounted on each of a pair of left and right vehicle head lamps 1 of a vehicle C shown in Fig. 2. The road surface rendering lamp 2 includes a road surface rendering device 3 (see Figs. 1A and 1B) that renders a road surface display such as a figure or a character of a predetermined form by emitting light onto a road surface ahead of the vehicle. A pair of left and right road surface rendering lamps 2 render, onto a road surface, a composite road surface display formed by overlapping light, a composite road surface display formed by combining separate displays that share an emission range, or independent road surface displays formed by emitting separate light. One of the left and right vehicle head lamps 1 may not include the road surface rendering device 3, and the road surface rendering device 3 may be mounted at any position such as a central portion of an outer side of a vehicle body.

The road surface rendering device 3 shown in Fig. 1A may include any one or all of a control unit 5, a road surface rendering unit 6, an imaging unit 7, a car navigation system 8, a road information communication system 9, a vehicle speed sensor 10, a radar sensor 11, a rain sensor 12, a road surface sensor 13, a wiper sensor 14, an inclination angle sensor 15, a head lamp sensor 16a, and an illuminance sensor 16b. The control unit 5 is implemented by an arithmetic control unit such as a CPU.

Fig. 1B shows a vehicle road surface rendering system 33 including a vehicle road surface rendering device 3A that is a modification of the vehicle road surface rendering device 3 shown in Fig. 1A. The vehicle road surface rendering system 33 in Fig. 1B is a system used in a vehicle equipped with an autonomous driving device or the like. The vehicle road surface rendering system 33 includes the road surface rendering device 3A, and the imaging unit 7, the car navigation system 8, the road information communication system 9, the vehicle speed sensor 10, the radar sensor 11, the rain sensor 12, the road surface sensor 13, the wiper sensor 14, the inclination angle sensor 15, the head lamp sensor 16a, and the illuminance sensor 16b of the road surface rendering device 3 in Fig. 1A excluding the control unit 5 and the road surface rendering unit 6. The road surface rendering device 3A includes the control unit 5 and the road surface rendering unit 6. The control unit 5 and the road surface rendering unit 6 are mounted on the vehicle C.

The imaging unit 7, the car navigation system 8, the road information communication system 9, the vehicle speed sensor 10, the radar sensor 11, the rain sensor 12, the road surface sensor 13, the wiper sensor 14, the inclination angle sensor 15, the head lamp sensor 16a, and the illuminance sensor 16b in Fig. 1B are installed outside the vehicle (or are installed on the vehicle excluding the road monitoring camera 7b to be described later), and are connected to the control unit 5 of the road surface rendering device 3A mounted on the vehicle.

According to the road surface rendering system 33 shown in Fig. 1B, only the road surface rendering device 3A including the control unit 5 and the road surface rendering unit 6 that are used for road surface rendering is mounted on the vehicle C, and the other configurations, that is, any one or all of the imaging unit 7 to the illuminance sensor 16b as described above are installed outside the vehicle C. Therefore, in addition to existing sensors such as the vehicle speed sensor or the car navigation system mounted on the vehicle C in advance, other configurations other than the road surface rendering device 3A can be added (retrofitted). According to the road surface rendering system 33, configurations other than the road surface rendering device 3A is installed outside the vehicle C and a plurality of vehicles each equipped with the road surface rendering device 3A are controlled by one road surface rendering system 33, so that the road surface rendering device can be simplified.

Based on detection results of the imaging unit 7, the car navigation system 8, the road information communication system 9, the vehicle speed sensor 10, the radar sensor 11, the rain sensor 12, the road surface sensor 13, the wiper sensor 14, the inclination angle sensor 15, the head lamp sensor 16a, and the illuminance sensor 16b, the control unit 5 controls the road surface rendering unit 6 to render a road surface display of a predetermined form such as a collision warning display 27 onto a road surface of a traveling lane of the vehicle C.

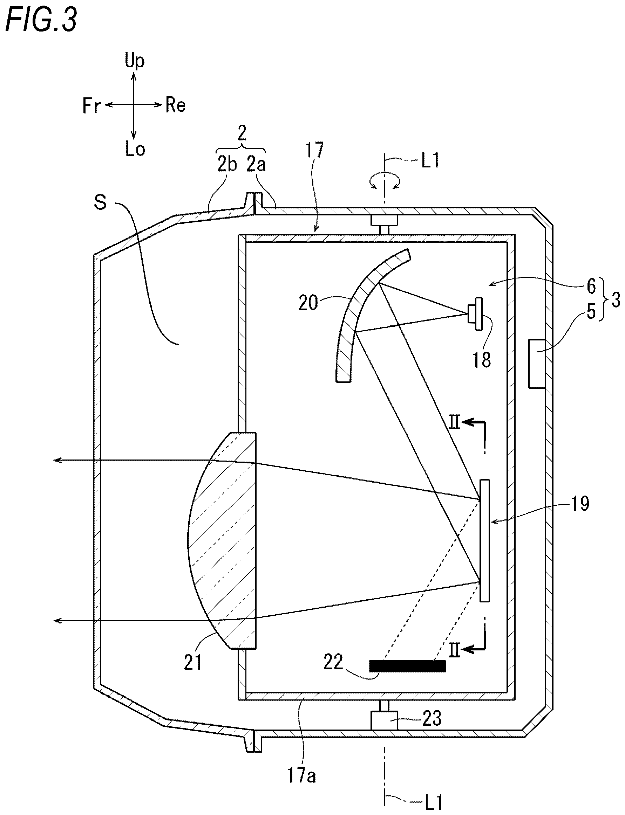

The road surface rendering unit 6 will be described with reference to Figs. 1A, 1B, and 3. As shown in Figs. 1A and 1B, the road surface rendering unit 6 includes a light source 18 and a light deflection device 19. As shown in Fig. 3, the road surface rendering unit 6 constitutes a part of the road surface rendering unit 17. The road surface rendering unit 17 includes the light source 18, the light deflection device 19, a reflective optical member 20 such as a reflector, a projection optical member 21 such as a plano-convex lens, and a light absorption member 22 that are provided in a unit body 17a. The road surface rendering unit 17 further includes the road surface rendering lamp 2 disposed in a housing S that is internally formed with a lamp body 2a having an opening at a front side of the vehicle and a transparent or translucent front cover 2b that closes the opening. The road surface rendering unit 17 is held in a manner in which the road surface rendering unit 17 can horizontally rotate inside the lamp body 2a, and is configured to swing around a central axis L1 by a motor 23 or the like. The road surface rendering unit 17 tilts to the left or the right under the control of the control unit 5, and switches an emitting direction of a road surface rendering display onto a road surface to a front side or an obliquely front side of the vehicle C (for the road surface rendering unit 17 of a rear combination lamp 4, switch to a rear side or an obliquely front side of the vehicle C).

Examples of the light source 18 include a semiconductor light emitting element such as a light emitting diode (LED), a laser diode (LD), and an electro luminescence (EL) element, a lamp bulb, an incandescent lamp (halogen lamp), and discharge (discharge lamp). In particular, the light source 18 is preferably an LD element from a viewpoint that a display with high visibility can be rendered onto a road surface even during daytime when illuminance is high. For example, the light source 18 may emit white light, yellow light, or the like to a front side, and emit red light or the like to a rear side.

The reflective optical member 20 reflects light emitted from the light source 18 toward the light deflection device 19. The light deflection device 19 is disposed on an optical axis of the projection optical member 21. The light deflection device 19 selectively reflects the reflected light from the reflective optical member 20 to the projection optical member 21, and emits the reflected light to the outside of the road surface rendering lamp 2. Light emitted from the road surface rendering lamp 2 of the vehicle head lamp 1 is used to render a road surface display of a form to be described later in a range from a front side to an obliquely front side of the vehicle C based on a horizontal swing of the road surface rendering unit 17.

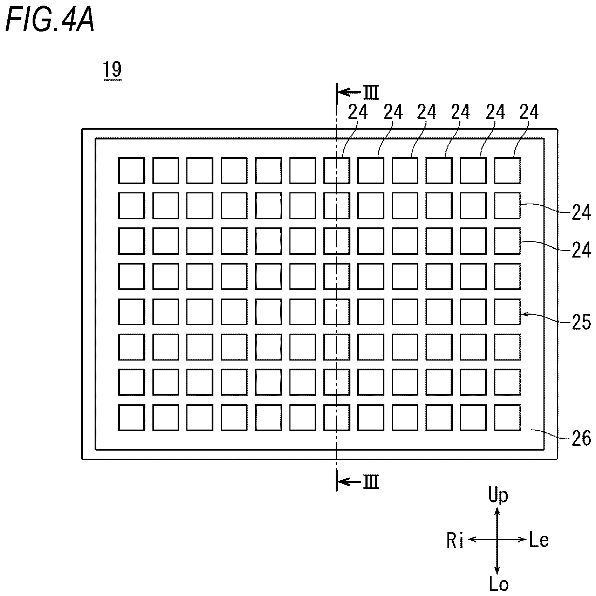

A digital mirror device (DMD) that is a micro-mirror device can be used as the light deflection device 19 according to the present embodiment. As shown in Fig. 4A, the light deflection device 19 includes a micro-mirror array 25 in which a plurality of minute mirror elements 24 each having a reflective surface 24a on a surface of the mirror element 24 are arranged in a matrix. The light deflection device 19 includes a transparent cover member 26 disposed at a light emitting side of the reflective surface 24a of each of the mirror elements 24.

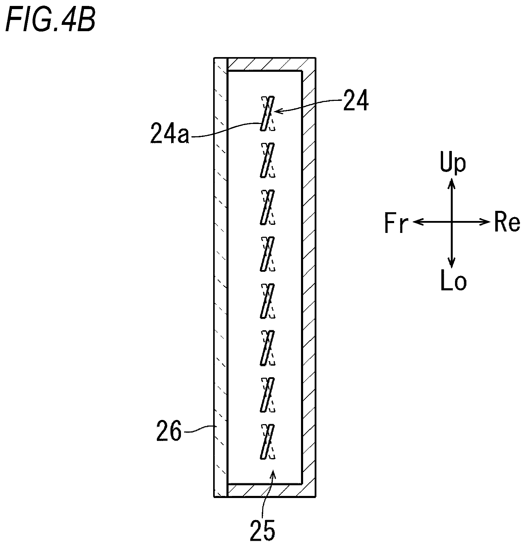

Each of the mirror elements 24 in the micro-mirror array 25 can be switched between an ON state (a solid line position shown in Fig. 4B) in which light emitted from the light source 18 is emitted toward the projection optical member 21 so that the light can be used as a desired light distribution pattern and an OFF state (a broken line position shown in Fig. 4B) in which light emitted from the light source 18 is reflected by the light absorption member 22 so that the light cannot be effectively used. Specifically, each of the mirror elements 24 can be switched between the ON state and the OFF state around a rotation axis. Each mirror element 24 emits a part of the emitted light to the projection optical member 21, and reflects the other emitted light to the light absorption member 22, so that the other emitted light cannot be effectively used. The micro-mirror array 25 can obtain a light distribution pattern or the like corresponding to a desired projection image by independently controlling the ON and OFF states of the plurality of mirror elements 24 arranged in a matrix.

The micro-mirror array 25 shown in Figs. 4A and 4B represents brightness and darkness of light in a stepwise manner and represents reflective light of white light in monochrome by adjusting an ON time ratio when switching the ON and OFF states of each mirror element 24 at a high speed. When reflective light from each mirror element 24 is represented to light of a desired color, light source units of three or more colors such as red, green, and blue in the light source 18 are used to emit light to the light deflection device 19 in a time division manner, and the ON and OFF states of the mirror element are switched in a division of thousands times per second, so that a person seeing the reflective light recognizes the reflective light as mixed light due to an illusion (afterimage effect) of human eyes. As a result, the minute mirror elements 24 can represent various colors having predetermined brightness and darkness, and the light deflection device 19 can render a mark of a desired form, that is, a collision warning display onto a road surface by a set of light spots. The set of light spots has a predetermined brightness and color and is emitted in a matrix by the plurality of mirror elements 24 that are independently controlled.

Instead of the DMD, the light deflection device 19 may adopt a scanning mechanism for reflecting light from a light source by a reflector that is swingable in a two-dimensional direction at high speed and scans a road surface with the reflected light in a two-dimensional direction at high speed to render a mark of a desired form onto the road surface. That is, the light deflection device 19 may widely adopt a rotary scanner, a Galvano scanner, a resonant scanner, an optical micro electro mechanical systems (MEMS) scanner, a polygon mirror, and the like.

As shown in Figs. 1A and 1B, the imaging unit 7 of the vehicle road surface rendering device 3 includes an in-vehicle camera 7a, the road monitoring camera 7b, and an image processing device 7c. The imaging unit 7 may function as a lane form detection unit that detects a form of a traveling lane on which the vehicle C travels based on an image obtained by imaging surroundings of the vehicle C, or may function as an obstacle detection unit that detects the presence or absence of an on-road obstacle on the traveling lane or in the vicinity of the traveling lane and a position of the on-road obstacle from the vehicle C.

As shown in Fig. 2, the in-vehicle camera 7a may be incorporated in any one of the left and right vehicle head lamps 1 (incorporated in the right vehicle head lamp 1 in the present embodiment) so that surroundings ahead of the vehicle C can be imaged, or may be mounted at a position where a top surface of a ceiling of a vehicle body, a hood, a door mirror, and the like or surroundings of the vehicle C can be imaged. The in-vehicle camera 7a images surroundings of the vehicle C on which the in-vehicle camera 7a is mounted. The road monitoring camera 7b is installed at a road and images surroundings of the vehicle C coming close to the road monitoring camera 7b. The image processing device 7c is mounted on the vehicle C, and detects a form of a traveling lane of the vehicle C, the presence or absence of an on-road obstacle, and a position of the on-road obstacle by analyzing an image captured by the in-vehicle camera 7a or an image that is captured by the road monitoring camera 7b and transmitted to the image processing device 7c via a communication line, and the image processing device 7c outputs a detection result to the control unit 5.

The form of the traveling lane detected by the imaging unit 7 is a straight road, a curved road, a street corner, an intersection, a T-shaped road, or the like. The on-road obstacle is a pedestrian passing through a traveling lane of the vehicle C or in the vicinity of the traveling lane, another vehicle traveling on an opposite lane or an intersecting road, an object fallen on the traveling lane, or the like.

Based on road information that is related to a form of a road, raining, snowing, freezing on a road surface, and the like and that is stored in the car navigation system 8 and the road information communication system 9 or transmitted via a communication line and position information of the own vehicle acquired by a satellite positioning system such as a global navigation satellite system (GNSS) and a global positioning system (GPS, registered trademark), the car navigation system 8 and the road information communication system 9 function as a lane form detection unit that detects a form of a traveling lane on which the vehicle C travels, a vehicle speed detection unit that detects a speed of the vehicle C based on a change in position information of the own vehicle, a wet road surface detection unit that detects whether a road on which the vehicle C travels is wet based on the road information related to raining, snowing, freezing on a road surface, and the like, a road gradient detection unit that detects a gradient of a road on which the vehicle C travels based on the road information. The car navigation system 8 and the road information communication system 9 output detection results to the control unit 5.

The vehicle speed sensor 10 functions as a speed detection unit that detects a speed of the vehicle C and outputs a detection result to the control unit 5.

The radar sensor 11 is a microwave radar sensor, a millimeter wave radar sensor, and the like. The radar sensor 11 functions as an obstacle detection unit that detects the presence or absence of an on-road obstacle on the traveling lane or in the vicinity of the traveling lane of a road on which the vehicle C travels and a position of the on-road obstacle from the vehicle C. The radar sensor 11 outputs a detection result to the control unit 5.

The rain sensor 12 is mounted on the vehicle C. The rain sensor 12 is a raindrop sensor or the like that detects whether there are raindrops or snow coming into contact with a windshield, a vehicle body, or the like. When the rain sensor 12 detects that there are raindrops or snow coming close to the vehicle C, the rain sensor 12 functions as a wet road surface detection unit that outputs a detection result indicating that a road surface of a traveling lane is wet to the control unit 5.

The road surface sensor 13 is mounted on the vehicle C. The road surface sensor 13 is, for example, a sensor that detects water caused by raining, snow, or ice due to freezing on a road surface by analyzing reflection of infrared laser waves or the like emitted to the road surface. When the road surface sensor 13 detects water, snow, or ice on the road surface, the road surface sensor 13 may function as a wet road surface detection unit that outputs a detection result indicating that a road surface of a traveling lane is wet to the control unit 5.

The wiper sensor 14 is a sensor that detects switching between ON and OFF of a wiper of the vehicle C. When the wiper sensor 14 detects a fact that the wiper is manually or automatically switched from OFF to ON, the wiper sensor 14 may function as a wet road surface detection unit that outputs a detection result indicating that a road surface of a traveling lane is wet to the control unit 5.

The inclination angle sensor 15 is a sensor that detects inclination of the vehicle C on which the inclination angle sensor 15 is mounted. The inclination angle sensor 15 may function as a road gradient detection unit that detects whether a road on which the vehicle C travels is an uphill road or a downhill road according to an inclination angle of the vehicle C on the road relative to a horizontal direction. In the present embodiment, for example, an angle at which the vehicle C is in a horizontal state is defined as a reference angle of 0°, an inclination angle at which the vehicle C is inclined in an uphill direction in which a front end of the vehicle C is located upward than a driver seat is defined as a plus angle, and an inclination angle at which the vehicle C is inclined in a downhill direction in which the front end of the vehicle C is located downward than the driver seat is defined as a minus angle. In this case, when the inclination angle sensor 15 detects that an inclination angle of the vehicle C is a plus angle, the inclination angle sensor 15 outputs a detection result indicating that a road on which the vehicle C travels is an uphill road to the control unit 5. On the other hand, when the inclination angle sensor 15 detects that an inclination angle of the vehicle C is a minus angle, the inclination angle sensor 15 outputs a detection result indicating that the road on which the vehicle C travels is a downhill road to the control unit 5.

The head lamp sensor 16a is mounted on the vehicle C. The head lamp sensor 16a is a sensor that detects a fact that the vehicle head lamp 1 is switched between ON and OFF. When the head lamp sensor 16a detects that the vehicle head lamp 1 of the vehicle C is manually or automatically switched from OFF to ON, the head lamp sensor 16a may function as a brightness and darkness detection unit that outputs a detection result indicating that a road on which the vehicle C travels is dark to the control unit 5. The illuminance sensor 16b is mounted on the vehicle C. The illuminance sensor 16b is a sensor that detects brightness of light radiated to the vehicle C, a road, or the like in the vicinity of the vehicle C. When brightness of the radiated light is lower than certain brightness, the illuminance sensor 16b may function as a brightness and darkness detection unit that outputs a detection result indicating that a road on which the vehicle C travels is dark to the control unit 5.

For example, the road surface rendering lamp 2 including the road surface rendering unit 6 according to the present embodiment renders the collision warning display 27 having a band shape and extending to a road surface ahead of the vehicle C as shown in Fig. 2. The collision warning display 27 is rendered from the vehicle C to a stoppable position on a curved road along a traveling lane that has a curved form or the like and on which the vehicle C travels and is rendered inside the traveling lane based on a form of the traveling lane on which the vehicle C travels. The form of the traveling lane is detected by the lane form detection unit implemented by any one of the imaging unit 7, the car navigation system 8, and the road information communication system 9. The wet road surface detection unit and the road gradient detection unit described above may function as a braking distance change detection unit that detects a change in a braking distance of the vehicle.

### (First Embodiment)

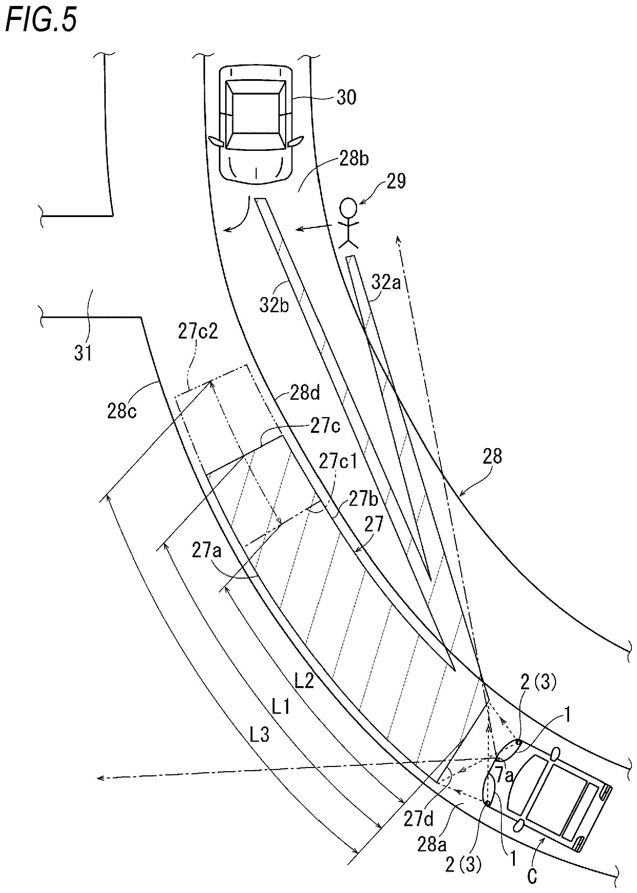

Next, a collision warning display for the vehicle C traveling on a curved road 28 according to a first embodiment will be described with reference to Fig. 5. First, in the vehicle C traveling on a traveling lane 28a of the curved road 28, the in-vehicle camera 7a or the road monitoring camera 7b of the imaging unit 7 of the road surface rendering device 3 shown in Figs. 1A and 1B images the entire curved road 28, a pedestrian 29 in the vicinity of the curved road 28, and an oncoming vehicle 30 that is about to turn to the right from an opposite lane 28b to a road 31 intersecting the traveling lane 28a. The captured image is subjected to an image processing by the image processing device 7c, and is output to the control unit 5. The car navigation system 8 and the road information communication system 9 output position information of the vehicle C and information related to a road on which the vehicle C travels to the control unit 5.

The control unit 5 of the road surface rendering device 3 executes an image analysis on imaged data of the imaging unit 7 to calculate a position, a curvature, a length, and the like related to a lane mark 28c at a left side and a road divider 28d at a right side of the traveling lane 28a ahead of the vehicle C, and acquires information related to a form and a position of the traveling lane 28a ahead of the vehicle C. The control unit 5 acquires the form and the position of the traveling lane 28a based on position information of the vehicle C and road information of a road on which the vehicle C travels, that are received from the car navigation system 8 or the road information communication system 9.

On the other hand, the control unit 5 calculates a braking distance of the vehicle C based on speed information of the traveling vehicle C acquired by the vehicle speed sensor 10 or by analyzing a surrounding image from the car navigation system 8 or the imaging unit 7, and calculates a stoppable position ahead of the vehicle C based on the braking distance.

The control unit 5 controls the road surface rendering unit 6 to render the curved and band-shaped collision warning display 27 onto a road surface between the lane mark 28c and the road divider 28d of the traveling lane 28a as shown in Fig. 5 based on the acquired form and position information of the traveling lane 28a and the calculated stoppable position of the vehicle C. The curved and band-shaped collision warning display 27 includes a curved left edge 27a in accordance with the lane mark 28c, a curved right edge 27b in accordance with the road divider 28d, a front edge 27c at a front end indicating a stoppable position when a brake is applied to stop the vehicle C, and a rear edge 27d indicating a position in the vicinity of a front side of the vehicle C. The curved and band-shaped collision warning display 27 is rendered in a manner of not protruding from the traveling lane 28a. The curved and band-shaped collision warning display 27 is rendered to have a length L1 along a central portion of the traveling lane 28a from the rear edge 27d indicating a position in the vicinity of a front side of the vehicle C to the front edge 27c indicating a stoppable position.

The control unit 5 recalculates a braking distance and a stoppable position based on a change in a speed of the traveling vehicle C detected by the vehicle speed detection unit, and changes a position of the front edge 27c of the collision warning display 27 to a front side or a rear side. For example, when a speed of the vehicle C that renders the collision warning display 27 having a length L1 is increased, a braking distance of the vehicle C increases and a stoppable position is located further away from the vehicle C. Therefore, based on a change in the stoppable position, the control unit 5 increases a length from the rear edge 27d of the collision warning display 27 from L1 to L3, and the front edge 27c moves forward to a position of 27c2. On the other hand, when the vehicle C that renders the collision warning display 27 having the length L1 decelerates, a braking distance of the vehicle C is reduced and a stoppable position comes close to the vehicle C. Therefore, based on a change in the stoppable position, the control unit 5 reduces a length from the rear edge 27d of the collision warning display 27 from L1 to L2, and the front edge 27c moves rearward to a position of 27c 1.

In a case in which a pedestrian or the like enters the traveling lane 28a at a position closer than the front edge 27c indicating a stoppable position at a current vehicle speed, the vehicle C may collide with the pedestrian or the like even if the vehicle C decelerates. When a driver of the vehicle C sees the collision warning display 27, the driver of the vehicle C is warned. Therefore, the driver of the vehicle C is facilitated to reduce a speed of the vehicle C so that the front edge 27c of the collision warning display 27 does not extend to the road 31 intersecting the traveling lane 28a, and can avoid danger of colliding with the pedestrian 29 who is about to cross a road in the vicinity of the road intersecting the traveling lane 28a or the oncoming vehicle 30 waiting for a right turn.

The control unit 5 can control the road surface rendering unit 6 to render the collision warning display 27 based on a detection of an on-road obstacle such as the pedestrian 29 and the oncoming vehicle 30 in the vicinity of the traveling lane 28a by analyzing an image captured by the imaging unit 7 or detected by the radar sensor 11. In this manner, the collision warning display 27 is issued only when an on-road obstacle is detected, and the driver of the vehicle C can recognize that the on-road obstacle is actually approaching and can drive more carefully.

When the imaging unit 7 or the radar sensor 11 detects the presence and a position of an on-road obstacle such as the pedestrian 29 and the oncoming vehicle 30, as shown in Fig. 5, the control unit 5 controls the road surface rendering unit 6 to render, onto a road surface, second collision warning displays 32a and 32b respectively extending from the vicinity of the vehicle C to the vicinity of the detected pedestrian 29, the oncoming vehicle 30, and other on-road obstacles (not shown). In this manner, the driver of the vehicle C can recognize a specific position of the pedestrian or the on-road obstacle in advance. As a result, the driver of the vehicle C is facilitated to decelerate, so that the front edge 27c of the collision warning display 27 indicating a stoppable position moves further away from a detected position of the pedestrian or the oncoming vehicle, and collision danger between the vehicle C and the pedestrian or the oncoming vehicle can be prevented.

According to the vehicle road surface rendering device 3 having the above configuration, a road surface display is rendered onto the traveling lane 28a having a curved shape without protruding from the traveling lane 28a, so that a driver can recognize danger on the traveling lane 28a.

According to the vehicle road surface rendering device 3 having the above configuration, the collision warning display 27 is rendered up to a stoppable position of the vehicle C on the traveling lane 28a having a curved shape, so that the driver of the vehicle C who is concentrated on operating a steering wheel along a curved road can recognize collision danger with an on-road obstacle, such as a preceding vehicle and a pedestrian, that is present in the collision warning display 27 rendered on the traveling lane 28a.

According to the vehicle road surface rendering device 3 having the above configuration, the driver of the vehicle C who is concentrated on operating the steering wheel along a curved road can recognize an on-road obstacle by lighting the collision warning display 27, and can be more accurately warned about the on-road obstacle.

According to the vehicle road surface rendering device 3 having the above configuration, the driver of the vehicle C who is concentrated on operating the steering wheel along a curved road can recognize a position relationship between the vehicle C and the detected on-road obstacle, so that the driver can be more accurately warned about the on-road obstacle.

According to the vehicle road surface rendering device 3 having the above configuration, when the driver of the vehicle C is concentrated on operating the steering wheel along a curved road and surroundings of the vehicle become dark when the vehicle travels during night, when the vehicle travels in a tunnel, or the like in which a field of view is narrowed, a road surface display including the collision warning display 27 is rendered onto a road surface. As a result, the driver can be more accurately warned about the on-road obstacle.

According to the vehicle road surface rendering device 3 having the above configuration, even when surroundings of the vehicle C is bright and it is difficult to see light, a road surface display including the collision warning display 27 is clearly rendered onto a road surface by laser light, so that the driver can be more accurately warned about the on-road obstacle.

### (Second Embodiment)

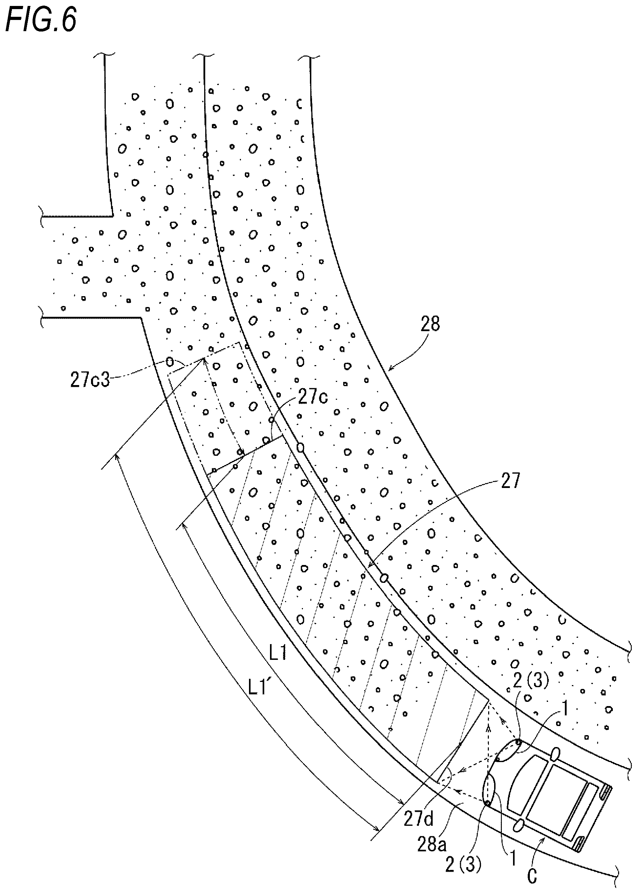

Fig. 6 shows a collision warning display for the vehicle C traveling on the curved road 28 that is a wet curved road due to water caused by raining, snow, ice caused by freezing on a road surface, and the like according to a second embodiment. When the rain sensor 12, the road surface sensor 13, the wiper sensor 14, the car navigation system 8, or the road information communication system 9 that acquires rain cloud radar information at a current position of the vehicle C detects information (detection result) indicating that the traveling lane 28a of the curved road 28 is wet at the current position of the vehicle C, the control unit 5 recalculates a stoppable position based on a fact that a braking distance at which the vehicle may be stopped is increased, and controls the road surface rendering unit 6 to increase a length from the rear edge 27d of the collision warning display 27 from L1 to L1', the front edge 27c indicating a stoppable position moves forward to a position of 27c3. As a result, the driver of the vehicle C can be facilitated to decelerate earlier than in a case of fine weather. Therefore, the vehicle C can be prevented from colliding with an on-road obstacle.

According to the vehicle road surface rendering device 3 having the above configuration, a vehicle stoppable position indicated by a front portion of the collision warning display 27 is changed to a front side or a rear side based on a change in a stoppable position of the vehicle C accompanying with a change in a road surface condition. Therefore, since the driver of the vehicle C accurately recognizes a change in the stoppable position, the driver can be more accurately warned about an on-road obstacle.

According to the vehicle road surface rendering device 3 having the above configuration, the vehicle stoppable position indicated by the front portion of the collision warning display 27 is located further away from the vehicle C based on an increase in a braking distance due to a wet road surface caused by raining, snowing, or the like. Therefore, since the driver of the vehicle C accurately recognizes an increase in the braking distance, the driver can be more accurately warned about an on-road obstacle.

### (Third Embodiment)

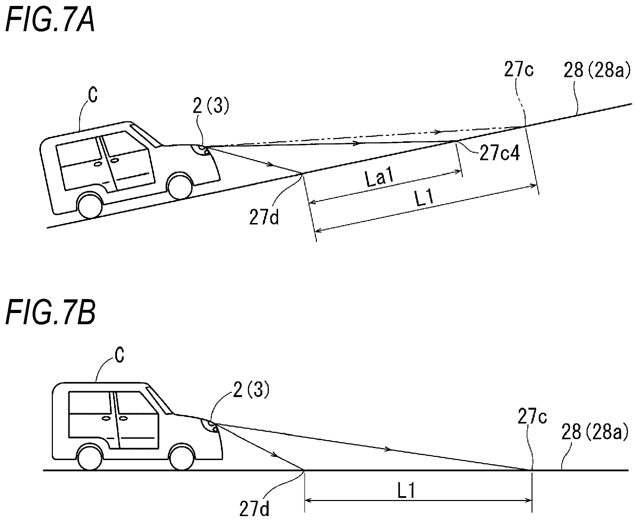

Figs. 7A to 7C show a collision warning display for the vehicle C traveling on a curved road that is either an uphill road or a downhill road according to a third embodiment. Although the vehicle C is described in Figs. 7A to 7C as if the vehicle C travels on a straight road as viewed from a side for the convenience of describing an uphill road or a downhill road, in fact, the vehicle C travels on a curved road.

When an inclination angle of the vehicle C detected by the inclination angle sensor 15 is 0°, or when the curved road 28 is a flat road at a current position of the vehicle C acquired by the car navigation system 8 and the road information communication system 9, the control unit 5 displays, inside the traveling lane 28a of the curved road 28, the collision warning display 27 having a length L1 from the rear edge 27d indicating a vicinity of the vehicle to the front edge 27c indicating a stop position of the vehicle as shown in Fig. 7B, based on a vehicle stoppable position calculated by the vehicle speed detection unit.

On the other hand, when an inclination angle of the vehicle C detected by the inclination angle sensor 15 is a plus angle, or when road information of the curved road 28 indicates that the curved road 28 is an uphill road at a current position of the vehicle C acquired by the car navigation system 8 and the road information communication system 9, the control unit 5 recalculates a vehicle stoppable position based on a fact that a braking distance is reduced, and reduces the length L1 from the rear edge 27d of the collision warning display 27 to a length La1, and the front edge 27c moves rearward to a position of 27c4, as shown in Fig. 7A.

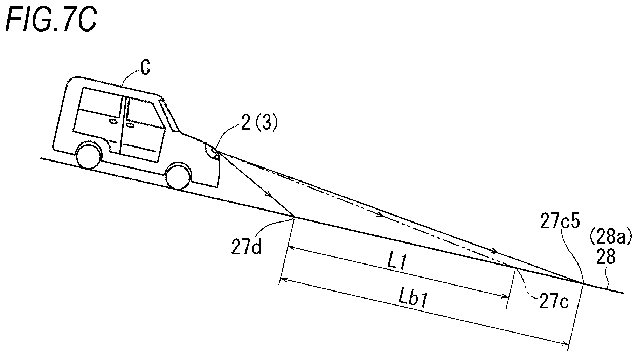

When an inclination angle of the vehicle C detected by the inclination angle sensor 15 is a minus angle, or when road information of the curved road 28 indicates that the curved road 28 is a downhill road at a current position of the vehicle C acquired by the car navigation system 8 and the road information communication system 9, the control unit 5 recalculates a vehicle stoppable position based on a fact that a braking distance is increased, and increases the length L1 from the rear edge 27d of the collision warning display 27 to a length Lab, and the front edge 27c moves forward to a position of 27c5, as shown in Fig. 7C. In this manner, a stoppable position on the curved road 28 changes based on a gradient of the curved road 28, and the driver of the vehicle C can accurately understand the stoppable position on the curved road 28. As a result, in particular, when the vehicle C travels on a downhill road, the driver of the vehicle C is facilitated to decelerate earlier than when the vehicle C travels on a flat road or an uphill road, so that collision danger between the vehicle C and an on-road obstacle can be prevented.

According to the vehicle road surface rendering device 3 having the above configuration, a vehicle stoppable position indicated by a front portion of the collision warning display 27 is located closer to the vehicle C based on a reduction in a braking distance of the vehicle C when the vehicle C travels on an uphill road. On the other hand, a vehicle stoppable position indicated by the front portion of the collision warning display 27 is located further away from the vehicle C based on an increase in a braking distance of the vehicle C when the vehicle C travels on a downhill road. Therefore, a driver who is concentrated on operating a steering wheel on a curved road accurately recognizes an increase or a reduction in a braking distance of the vehicle C, so that the driver can be more accurately warned about an on-road obstacle.

This application is based on Japanese Patent Application No. 2018-202065 filed on October 26, 2018 and Japanese Patent Application No. 2019-189352 filed on October 16, 2019, the contents of which are incorporated herein by reference.

## Claims

1. A vehicle road surface rendering device mounted on a vehicle, the vehicle road surface rendering device comprising:
a road surface rendering unit that uses light to render a road surface display onto a road surface in a traveling direction of the vehicle under the control of a control unit,
wherein based on a detection of a curved form of a traveling lane of the vehicle, the control unit controls the road surface rendering unit to render a road surface display having a shape in accordance with the curved form of the traveling lane onto the road surface inside the traveling lane.

2. The vehicle road surface rendering device according to claim 1,
wherein the road surface display is a collision warning display indicating a stop position of the vehicle, and
wherein the control unit calculates a braking distance based on a speed of the vehicle and a stoppable position of the vehicle based on the braking distance, and controls the road surface rendering unit to render, onto the road surface, the collision warning display that extends from a vicinity of the vehicle to the stoppable position of the vehicle in accordance with the curved form of the traveling lane.

3. The vehicle road surface rendering device according to claim 2,
wherein the control unit controls the road surface rendering unit to render the collision warning display onto the road surface based on a detection of an on-road obstacle on the traveling lane of the vehicle or in the vicinity of the traveling lane.

4. The vehicle road surface rendering device according to claim 3,
wherein based on a detection of the on-road obstacle, the control unit calculates a position of the on-road obstacle and controls the road surface rendering unit to render, onto the road surface, a second collision warning display extending from the vehicle to the on-road obstacle.

5. The vehicle road surface rendering device according to any one of claims 1 to 4,
wherein based on a detected change in the braking distance of the vehicle, the control unit corrects the braking distance calculated based on the speed of the vehicle and the stoppable position, and controls the road surface rendering unit to render, onto the road surface, the collision warning display extending from the vehicle to the corrected stoppable position.

6. The vehicle road surface rendering device according to claim 5,
wherein the control unit corrects the braking distance calculated based on the speed of the vehicle to be longer based on a detection result indicating that the traveling lane is wet.

7. The vehicle road surface rendering device according to claim 5,
wherein the control unit corrects the braking distance calculated based on the speed of the vehicle to be shorter based on a detection result indicating that the traveling lane is an uphill road, or corrects the braking distance calculated based on the speed of the vehicle to be longer based on a detection result indicating that the traveling lane is a downhill road.

8. The vehicle road surface rendering device according to any one of claims 1 to 7,
wherein the control unit controls the road surface rendering unit to render the collision warning display onto the road surface based on a detection result indicating that a road is dark.

9. The vehicle road surface rendering device according to any one of claims 1 to 8,
wherein the road surface rendering unit renders the collision warning display onto the road surface using laser light.
